# EUROPEAN PATENT SPECIFICATION

(11) **EP 2 579 659 B1**
(45) Date of publication and mention of the grant of the patent: **08.01.2025**
(21) Application number: 11789121.8
(22) Date of filing: 17.05.2011
(51) Int. Cl.: H04L 5/00, H04W 72/02, H04W 72/04

(54) **TRANSMISSION METHOD AND APPARATUS FOR NON-PERIODIC SOUNDING REFERENCE SIGNAL (SRS)**
ÜBERTRAGUNGSVERFAHREN UND -VORRICHTUNG FÜR NICHT PERIODISCHE KLANGREFERENZSIGNALE
PROCÉDÉ ET APPAREIL D'ÉMISSION DESTINÉS À UN SIGNAL DE RÉFÉRENCE DE SONDAGE NON PÉRIODIQUE (SRS)

(30) Priority: 31.05.2010 CN 201010195422
(43) Date of publication of application: 10.04.2013
(73) Proprietor: Datang Mobile Communications Equipment Co., Ltd., Beijing 100085 (CN)
(72) Inventor: CHEN, Wenhong, Beijing 100191 (CN); TAMRAKAR, Rakesh, Beijing 100191 (CN); XIAO, Guojun, Beijing 100191 (CN)
(74) Representative: Studio Torta S.p.A.
(86) International application number: PCT/CN2011/074186
(87) International publication number: WO 2011/150742

(56) References cited:
- WO-A1-2009/022866
- CN-A- 101 572 945
- CN-A- 101 702 631
- CN-A- 102 104 973
- MOTOROLA: "LTE-A Dynamic Aperiodic SRS - Triggering, Duration, Timing, and Carrier Aggregation", 3GPP DRAFT; R1-103187 - DYNAMIC APERIODIC SRS LTE-A, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Montreal, Canada; 20100510, 4 May 2010 (2010-05-04), XP050420236
- CATT ET AL: "Aperiodic SRS Transmission in LTE-A", 3GPP DRAFT; R1-102661, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Montreal, Canada; 20100510, 4 May 2010 (2010-05-04), XP050419871
- QUALCOMM INCORPORATED: "Further details on aperiodic dynamic SRS", 3GPP DRAFT; R1-102765 FURTHER DETAILS ON APERIODIC DYNAMIC SRS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Montreal, Canada; 20100510 - 20100514, 4 May 2010 (2010-05-04), XP050598311

## Description

### Field of the Invention

The present invention relates to the field of communication technology, in particular to a transmission method and an apparatus for an aperiodic SRS.

### Background of the Invention

In current system, uplink channel is detected relying on sounding symbol. eNB can acquire uplink channel information by the way that terminal equipment sends sounding symbol at the last symbol of SRS subframe, so as to schedule and measure resource transmitted through uplink, including measurement of RI (Rank Indication)/PMI (Precoding Matrix Indicator)/CQI (Channel Quality Indication), etc. SRS in LTE (Long Term Evolution) system is sent periodically, that is, terminal equipment will send sounding symbol continuously based on certain periodicity till entering the state of no data transmission. Parameters of periodic SRS are all configured through high-layer, including CS (Cycle Shift), bandwidth, frequency hopping parameter, periodicity, subframe sending position, etc. of SRS.

Owing to long scheduling periodicity and low scheduling efficiency, periodic SRS often occupies much more physical resources. Especially in LTE-A (Long Term Evolution Advanced) system, UE (User Apparatus) often requires sending SRS of multiple antennas at the same time, thus resulting in more resource consumption. To improve SRS resource utilization rate and reduce consumption of SRS resource, aperiodic SRS transmission is introduced in LTE-A system. Differing from periodic SRS, aperiodic SRS is dynamically activated by eNB. Once activating aperiodic SRS, terminal equipment will only send one-off sounding symbol, but not the periodic sounding symbol. eNB can acquire the required channel information more flexibly upon aperiodic sounding and it can reduce consumption of physical resource of SRS if closing or reducing transmission of periodic SRS when conditions permit.

Both periodic SRS and aperiodic SRS are transmitted above dedicated SRS subframe of cell, so it is necessary to solve the problem on how to schedule aperiodic SRS resource to provide adequate physical resource and ensure there is no resource conflict occurring to periodic SRS. Meanwhile, terminal equipment can transmit SRS in a more flexible mode after receiving parameter configuration and activation signalling of eNB. In present technologies, dedicated DCI format (Downlink Control Indicator format) for SRS is introduced in PDCCH (Physical Downlink Control Channel) to configure parameter of aperiodic SRS and share the same length with other uplink formats (such as format0) for multiplexing, thus realizing dynamic resource configuration. Both frequency-domain configuration and time-domain subframe configuration of aperiodic SRS are included in DCI format. Terminal equipment can conduct aperiodic SRS transmission in time frequency resource that controls signalling indicator after receiving control signalling sent by eNB. Another solution is to activate aperiodic SRS only with 1 bit signalling in UL grant or DL grant, and transmission parameters of both time-domain and frequency-domain are indicated through high-layer signalling.

In 3GPP TSG RAN WG1 Meeting #61 Montreal, Canada, 10th-14th, May, 2010, proposals of a LTE-A Dynsmic Aperiodic SRS- Triggering, Duration, Timing, and Carrier Aggegation are provided by Motorola and is discussed, referring to "R1-103187 - Dynamic Aperiodic SRS LTE-A".

In the above meeting, proposals of Aperiodic SRS Transmission in LTE-A are also provided by CATT, Potevio, referring to "R1-102661-A Aperiodic SRS Transmission in LTE-A".

Also in the above meeting, proposals of aperiodic dynamic SRS are provided by Qualcomm Incorporated, referring to "R1-102765 Further details on aperiodic dynamic SRS".

During implementation of the embodiments of the present invention, the applicant finds that the following problems exist in the available technology at least:
Configuration of aperiodic SRS by introducing dedicated DCI format of SRS in present technology will greatly increase resource consumption of PDCCH, even waste PDCCH resource to certain extent due to less configuration bit. There will be great resource consumption if many users are activated, thus making PDCCH unaffordable.

### Summary of the Invention

The embodiments of the present invention provide a method for transmitting an aperiodic SRS (Sounding Reference Symbol), a terminal equipment and an evolved Node B, as defined in the accompanying claims. The object of the invention is achieved by the subject-matter of the independent claims. The dependent claims describe advantageous embodiments. The scope of protection of the invention is limited by the appended claims.

Compared with available technology, the embodiments of the present invention have the following advantages: the present invention can reduce signalling overhead relying on high-layer semi-static configuration of time-domain resources of the aperiodic SRS. On one hand, a flexible aperiodic SRS time-domain transmission is allowed for the terminal equipment which can send the aperiodic SRS in multiple subframes and which is featured by low sounding delay and great sounding bandwidth. On the other hand, a flexible timing mode is also permitted for a terminal equipment which brings little restriction to scheduling.

### Brief Description of the Drawings

Fig. 1 is a flow diagram of a transmission method for an aperiodic SRS at a terminal equipment side provided by embodiments of the present invention;
Fig.2 is a flow diagram of a transmission method for an aperiodic SRS at an eNB side provided by embodiments of the present invention;
Fig.3 is a flow diagram of a transmission method for an aperiodic SRS under specific application scene provided by embodiments of the present invention;
Fig.4 is a structural diagram of a terminal equipment provided by embodiments of the present invention; and
Fig.5 is a structural diagram of an eNB provided by embodiments of the present invention.

### Detailed Description of the Embodiments of the Present Invention

In an LTE-A system, a periodic SRS (Sounding Reference Symbol) requires occupying much more physical resources due to introduction of multiple antenna transmission. To improve SRS resource utilization rate and reduce consumption of SRS resource, an aperiodic SRS transmission is introduced in the LTE-A system to activate one-off sounding through dynamic scheduling.

It is necessary to solve a problem of how to conduct time-domain resource scheduling of an aperiodic SRS and send the aperiodic SRS by a terminal equipment after receiving signalling from an eNB in a right way.

The embodiments of the present invention provide a transmission method for an aperiodic SRS. The eNB configures time-domain parameters of the aperiodic SRS through high-layer signalling or PDCCH signalling, and a terminal equipment conducts SRS transmission based on the configuration, which can reasonably and effectively schedule and transmit time-domain resources of the aperiodic SRS.

To solve the problem existing in current technology, embodiments of the present invention provide a transmission method for the aperiodic SRS in consideration of compatible LTE system.

The embodiments of the present invention provide a transmission method for the aperiodic SRS, including: the eNB informing a terminal equipment of parameter configuration of the aperiodic SRS through high-layer signalling or PDCCH signalling, and the terminal equipment conducting flexible aperiodic SRS transmission based on the parameter configuration.

Implementation of a UE side and an eNB side as well as cooperation of both will be described. However, it does not mean the two must be implemented in cooperation. In fact, when the UE and the eNB are implemented separately, the problems existing in the UE and eNB sides are solved. Application of the two in combination will acquire better technical effects.

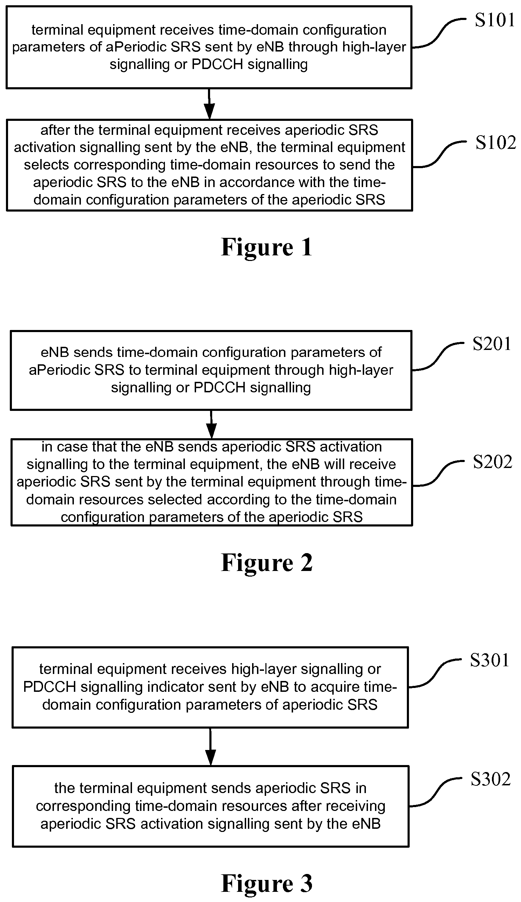

As shown in Fig. 1, a flow diagram of transmission method for an aperiodic SRS is provided in embodiments of the present invention, and the method comprises the following steps S101 and S102.

Step 101: a terminal equipment receives time-domain configuration parameters of an aperiodic SRS sent by an eNB through high-layer signalling or PDCCH signalling.

Herein, configuration parameters of aperiodic SRS specifically comprise:
(1) Configuration information of time-domain resource configuration periodicity for the aperiodic SRS, which can be divided into the following conditions:
   Condition I, hidden indication information, viz. the configuration information instructing the terminal equipment to use preset time-domain resource configuration periodicity.

In this condition, it is required to preset a specific time-domain resource configuration periodicity for both the terminal equipment and the eNB. Based on this, the time-domain resource configuration periodicity used by the terminal equipment can be informed according to default indication information or other parameter values that can represent the hidden indication information.

Condition II, dominant indication information, viz. the configuration information clearly indicating a value of the time-domain resource configuration periodicity used by the terminal equipment.

Such indication information requires occupying corresponding resource spaces. Thus, it can be predetermined that the terminal equipment acquires corresponding indication information in the corresponding resource spaces.

Condition III, configuration information associated with subframe configuration information.

A clear correspondence exists in such associated information so as to facilitate the terminal equipment to acquire corresponding configuration information.

(2) Subframe configuration information of the aperiodic SRS, which can be divided into the following specifically.

Condition I, continuous indicator, viz. clearly pointing out starting information and length information of subframe resources used by the terminal equipment.

The terminal equipment can clearly acquire which subframe resources are ones configured for itself through this indication.

Condition II, discrete indicator, viz. the information indicating whether one or more subframes are used by the terminal equipment for transmitting the aperiodic SRS.

Thus, it can indicate whether one or more subframes are the subframe sources configured for the terminal equipment in designated resource through clear indication information.

Condition III, configuration information associated with configuration information of time-domain resource configuration periodicity.

A clear correspondence exists in such associated information so as to facilitate the terminal equipment to acquire corresponding configuration information.

Step 102: when the terminal equipment receives aperiodic SRS activation signalling sent by the eNB, the terminal equipment selects corresponding time-domain resources to send the aperiodic SRS to the eNB in accordance with the time-domain configuration parameters of the aperiodic SRS.

Transmission strategy can be divided into the following during implementation:
Strategy I, when receiving the aperiodic SRS activation signalling sent by the eNB, the terminal equipment sends the aperiodic SRS in all configuration subframes within one time-domain resource configuration periodicity directly after a number of subframes in accordance with configuration parameter of the aperiodic SRS.
Strategy II, when receiving the aperiodic SRS activation signalling sent by the eNB, the terminal equipment determines to send the aperiodic SRS in the first configuration subframe or in all configuration subframes within one time-domain resource configuration periodicity after a number of subframes in accordance with the duration configuration information of the aperiodic SRS carried in high-layer signalling or PDCCH signalling.

The abovementioned flow is one transmission method for aperiodic SRS provided by the embodiments of the invention at a terminal equipment side. Accordingly, the embodiments of the invention also provide an implementation flow at an eNB side.

As shown in Fig. 2, a flow diagram of transmission method for aperiodic SRS at the eNB side is provided in embodiments of the present invention, and the method comprises the following steps.

Step 201: the eNB sends time-domain configuration parameters of the aperiodic SRS to the terminal equipment through high-layer signalling or PDCCH signalling.

Herein, please refer to the description in Step 101 for time-domain configuration parameters of the aperiodic SRS, and it will not be described repeately.

Step 202: in case that the eNB sends aperiodic SRS activation signalling to the terminal equipment, the eNB will receive the aperiodic SRS sent by terminal equipment through time-domain resources selected according to the time-domain configuration parameters of the aperiodic SRS.

Corresponding to the two transmission strategies in the Step 102, specific flow of the step is as follows:
after the eNB sends the aperiodic SRS activation signalling to the terminal equipment, the eNB receives the aperiodic SRS sent in all configuration subframes within one time-domain resource configuration periodicity directly after a number of subframes by the terminal equipment in accordance with the configuration parameters of the aperiodic SRS; or
after the eNB sends the aperiodic SRS activation signalling to the terminal equipment, the eNB receives the aperiodic SRS sent in the first configuration subframe or in all configuration subframes within one time-domain resource configuration periodicity after a number of subframes by the terminal equipment in accordance with the duration configuration information of the aperiodic SRS carried in high-layer signalling or PDCCH signalling.

It can be seen from the embodiments that compared with present technology, embodiments of the present invention at least have the following advantages.

The application of the technical solution of the embodiments of the present invention can reduce signalling overhead through high-level semi-static configuration of time-domain resources of the aperiodic SRS. On one hand, flexible aperiodic SRS time-domain transmission is allowed for the terminal equipment which can send the aperiodic SRS in multiple subframes, which is featured by low sounding delay and great sounding bandwidth. On the other hand, a flexible timing mode is also permitted for the terminal equipment which brings little restriction to scheduling.

The technical solution provided by the embodiments of the present invention will be explained in combination with specific implementation scene.

An implementation flow at the terminal equipment side shall be taken as the example for easy description as below, so is at the eNB side.

As shown in Fig. 3, a flow diagram of transmission method for aperiodic SRS under specific application scene is provided by embodiments of the present invention, and the method comprises the following steps:
Step 301, a terminal equipment receives high-layer signalling or PDCCH signalling indicators sent by an eNB to acquire time-domain configuration parameters of aperiodic SRS, which at least comprises:
(1) configuration information of time-domain resource configuration periodicity for the aperiodic SRS, which can be divided into three indication modes:
   Mode I, hidden indication mode, taking a set fixed periodicity as a time-domain resource configuration periodicity of the aperiodic SRS.

For example, both the terminal equipment and the eNB are set to take 10ms as time-domain resource configuration periodicity of the aperiodic SRS.

Mode II, dominant indication mode, independently indicating the configuration periodicity of time-domain resource for transmitting aperiodic SAR with several bits.

For example, configuration periodicity of time-domain resource used for transmitting aperiodic SRS is indicated by indication information carried in 1 bit in high-layer signalling or PDCCH signalling to be 10ms or 20ms.

Mode III, indication mode similar to that of periodic SRS to indicate jointly with subframe configuration.

Explanation through two specific embodiments is made as below:
Embodiment I: every user is allowed to configure only one aperiodic SRS subframe and two different time-domain periodicitys. Refer to Table 1 for specific configuration indication:

**Table 1**

| Indication index (Isrs) | Configuration periodicity | Subframe index |
|---|---|---|
| 0-9 | 10ms | Isrs |
| 10-29 | 20ms | Isrs-10 |
| 30-32 | Reserve | |

Embodiment II: every user is allowed to configure two aperiodic SRS subframes and a time-domain periodicitys. Refer to Table 2 for specific configuration indication:

**Table 2**

| Indication index (Isrs) | Configuration periodicity | Subframe index |
|---|---|---|
| 0-9 | 10ms | Isrs |
| 10-18 | 10ms | (0, Isrs-9) |
| ... | ... | ... |
| 52-53 | 10ms | (7, Isrs-44) |
| 54 | 10ms | (8, Isrs-45) |

(2) Subframe configuration information of aperiodic SRS, which can be divided into three indication modes:
Mode I, continuous indication mode, independently indicating initial position index and continuous length (viz. the continuous subframe number) of subframe resource.

For example, indicate 10 possible initial subframes position with 4 bits in high-layer signalling or PDCCH signalling, then indicate 1-4 possible continuous subframes number with 2 bits.

Mode II, discrete indication mode, indicating whether each subframe can be used for transmitting aperiodic SRS of user in bitmap mode;

For example, indicate whether the 10 subframes can be used for transmitting aperiodic SRS of the user respectively with 10 bits in high-layer signalling or PDCCH signalling. If the subframe is used for transmitting aperiodic SRS, the corresponding bit is 1, otherwise, it is 0.

For example, 1000001010 represents that the 1^{st}, 7^{th} and 9^{th} subframes can be used for transmitting aperiodic SRS.

Mode III, the indication mode similar to that of periodic SRS for indicating jointly with configuration periodicity of time-domain resource.

Specific embodiments are similar to those in the Table 1 and Table 2, and will not be described hereby.

Step 302, terminal equipment sends aperiodic SRS in corresponding time-domain resources when receiving aperiodic SRS activation signalling sent by eNB.

It can be treated in the following two modes in specific application scene:
Mode I, when receiving the activation signalling, the terminal equipment transmits aperiodic SRS in all configuration subframes within a time-domain resource configuration periodicity after a number of subframes.
Mode II, terminal equipment receives aperiodic SRS duration configuration indicated by eNB through high-layer indicator, and decides to send aperiodic SRS only on a configuration subframe or transmit aperiodic SRS on all configuration subframes in a time-domain configuration periodicity after a number of subframes.

It shall be further noted that technical solution provided by embodiments of the present invention is extensively applied. It can be used for uplink transmission with any antenna quantity and array (such as linear array, polarization array) in any duplexing system (TDD (Time Division Duplex) or FDD (Frequency Division Duplex) system), and in any sending mode (such as SU-MIMO (Single Users-MIMO), MIMO (Multiple Input Multiple Output), MU-MIMO (MultipleUsers-MIMO), CoMP (Coordinated multi-point transmission/reception), etc.

Based on the same inventive concept, embodiments of the present invention also provide a terminal equipment and an eNB. Since the principle of these apparatuss to solve problem is similar to the transmission method for aperiodic SRS (Sounding Reference Symbol), these sets of apparatus shall be implemented with reference to the implementation of the method, which will not be described again hereby.

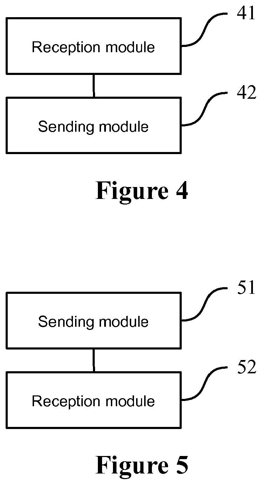

The embodiments of the present invention also provide a terminal equipment, structural diagram of which is shown in Fig. 4, further including:
Reception module 41, which is used to receive time-domain configuration parameters of aperiodic SRS sent by eNB through high-layer signalling or PDCCH signalling, as well as aperiodic SRS activation signalling sent by the eNB.

Specifically, the time-domain configuration parameter of the aperiodic SRS received by the reception module 41 includes configuration information of time-domain resource configuration periodicity and subframe configuration information of aperiodic SRS.

Herein, configuration information of the time-domain resource configuration periodicity of aperiodic SRS refers to:
configuration information instructing the terminal equipment to use preset time-domain resource configuration periodicity; or
configuration information indicating a value of the time-domain resource configuration periodicity used by the terminal equipment; or
configuration information associated with subframe configuration information;

The subframe configuration information of the aperiodic SRS refers to:
starting information and length information of subframe resources used by the terminal equipment; or
information indicating whether one or more subframes are used by the terminal equipment of for transmitting the aperiodic SRS; or
configuration information associated with configuration information of time-domain resource configuration periodicity.

Sending module 42, which is used to select corresponding time-domain resources and send aperiodic SRS to the eNB in accordance with the time-domain configuration parameters of aperiodic SRS received by the reception module 41 when the reception module 41 receives aperiodic SRS activation signalling sent by the eNB. The module will be treated in following two conditions under specific application scene:
when the reception module 41 receives the aperiodic SRS activation signalling sent by the eNB, the sending module 42 sends the aperiodic SRS in all configuration subframes within one time-domain resource configuration periodicity directly after a number of subframes in accordance with the configuration parameter of aperiodic SRS; or
when the reception module 41 receives the aperiodic SRS activation signalling sent by the eNB, the sending module 42 determines to send the aperiodic SRS in the first configuration subframe or in all configuration subframes within one time-domain resource configuration periodicity after a number of subframes in accordance with the duration configuration information of aperiodic SRS carried in high-layer signalling or PDCCH signalling.

Accordingly, embodiments of the present invention also provide an eNB, whose the structural diagram is shown in Fig. 5, including:
Sending module 51, which is used to send time-domain configuration parameters of the aperiodic SRS to the terminal equipment through high-layer signalling or PDCCH signalling, and send aperiodic SRS activation signalling to terminal equipment.

Herein, the time-domain configuration parameters of aperiodic SRS are similar to the aforementioned one, and it will not be described repeatedly.

Reception module 52, which is used to receive the aperiodic SRS sent by the terminal equipment through time-domain resources selected in accordance with the time-domain configuration parameters of the aperiodic SRS after sending module 51 sends the aperiodic SRS activation signalling to the terminal equipment.

Corresponding to invention mode of the terminal equipment, receiving mode for this module is divided into the following conditions:
after the sending module 51 sends the aperiodic SRS activation signalling to the terminal equipment, the reception module 52 receives aperiodic the SRS sent by terminal equipment in all configuration subframes within a time-domain resource configuration periodicity directly after a number of subframes in accordance with the configuration parameter of the aperiodic SRS; or
after sending module 51 sends the aperiodic SRS activation signalling to the terminal equipment, the reception module 52 receives the aperiodic SRS in the first configuration subframe or all configuration subframes within a time-domain resource configuration periodicity after a number of subframes in accordance with the duration configuration information of the aperiodic SRS carried in high-layer signalling or PDCCH signalling.

Through the description of implementation mode aforethe, technician of the field can clearly understand that embodiments of the present invention can be realized through hardware or software and necessary universal hardware platform. Accordingly, technical solution in embodiments of the present invention can be embodied in form of software product which can be stored in a non-volatile memory medium (CD-ROM, USB flash disc, Mobile HD, etc.), including several instructions to enable one computer apparatus (personal computer, server or network apparatus, etc.) to implement the method mentioned in all implementation scenes in embodiments of the present invention.

Technician of the field can understand that attached figure is just a schematic diagram of preferred implementation scene; module or flow in the attached figure is not necessary to implement embodiments of the present invention.

Technician of the field can understand that modules in device in implementation scene can be distributed in devices of implementation scene according to its description, and also can be distributed in one or many devices that are different from the implementation scene. Modules in the implementation scene can be combined as one module, or further dismantled into several sub-modules.

The scope of protection of the invention is limited by the appended claims.

## Claims

1. A method for transmitting aperiodic Sounding Reference Symbol, SRS, comprising:
receiving (S101), by a terminal equipment, time-domain configuration parameters of the aperiodic SRS sent by an Evolved Node B, eNB, through high-layer signalling or Physical Downlink Control Channel, PDCCH, signalling;
**characterized in that**,
the method further comprises:
receiving aperiodic SRS activation signaling sent by the eNB after the eNB sends the time-domain configuration parameters;
directly sending, in accordance with the time-domain configuration parameters of the aperiodic SRS, the aperiodic SRS in all configuration subframes within one time-domain resource configuration periodicity after a number of subframes subsequent to receiving aperiodic SRS activation signaling, wherein the all configuration subframes within one time-domain resource configuration periodicity are determined according to the time-domain configuration parameters.

2. The method as claimed in claim 1, wherein, the time-domain configuration parameters of the aperiodic SRS comprise:
configuration information of time-domain resource configuration periodicity of the aperiodic SRS; and/or
subframe configuration information of the aperiodic SRS.

3. The method as claimed in claim 2, wherein, the configuration information of time-domain resource configuration periodicity of the aperiodic SRS comprises:
configuration information instructing the terminal equipment to use preset the time-domain resource configuration periodicity; or
configuration information indicating a value of the time-domain resource configuration periodicity used by the terminal equipment; or
configuration information associated with the subframe configuration information.

4. The method as claimed in claim 2, wherein, the subframe configuration information of the aperiodic SRS comprises:
starting information and length information of subframe resources used by the terminal equipment; or
information indicating whether one or more subframes are used by the terminal equipment for transmitting the aperiodic SRS; or
configuration information associated with configuration information of the time-domain resource configuration periodicity.

5. A terminal equipment, comprising:
a reception module (41), used to receive time-domain configuration parameters of aperiodic Sounding Reference Symbol, SRS, sent by an Evolved Node B, eNB, through high-layer signalling or Physical Downlink Control Channel, PDCCH, signalling;
**characterized in that**,
the reception module (41) is further used to receive aperiodic SRS activation signaling sent by the eNB after the eNB sends the time-domain configuration parameters, the terminal further comprises: a sending module (42), used to:
directly send, in accordance with the time-domain configuration parameters of the aperiodic SRS, the aperiodic SRS in all configuration subframes within one time-domain resource configuration periodicity after a number of subframes subsequent to receiving aperiodic SRS activation signaling, wherein the all configuration subframes are determined according to the time-domain configuration parameters.

6. The terminal equipment as claimed in claim 5, wherein, the time-domain configuration parameters of the aperiodic SRS received by the reception module comprise configuration information of time-domain resource configuration periodicity of the aperiodic SRS and/or subframe configuration information of the aperiodic SRS;
wherein the configuration information of time-domain resource configuration periodicity of the aperiodic SRS comprises:
configuration information instructing the terminal device to use preset time-domain resource configuration periodicity, or
configuration information indicating a value of the time-domain resource configuration periodicity used by the terminal equipment, or
configuration information associated with the subframe configuration information;
the subframe configuration information of the aperiodic SRS comprises:
starting information and length information of subframe resources used by the terminal equipment, or
information indicating whether one or more subframes are used by the terminal equipment for transmitting the aperiodic SRS, or
configuration information associated with the configuration information of the time-domain resource configuration periodicity.

7. A method for transmitting aperiodic Sounding Reference Symbol, SRS, comprising:
sending (S201), by an Evolved Node B, eNB, time-domain configuration parameters of the aperiodic SRS to a terminal equipment through high-layer signalling or Physical Downlink Control Channel, PDCCH, signalling;
**characterized in that**,
the method further comprises:
sending, by the eNB, aperiodic SRS activation signaling after sending the time-domain configuration parameters;
receiving, by the eNB in accordance with the time-domain configuration parameters of the aperiodic SRS, the aperiodic SRS directly sent by the terminal equipment in all configuration subframes within one time-domain resource configuration periodicity after a number of subframes subsequent to sending the aperiodic SRS activation signaling by the eNB , wherein the all configuration subframes are determined according to the time-domain configuration parameters.

8. The method as claimed in claim 7, wherein, the time-domain configuration parameters of the aperiodic SRS comprise:
configuration information of time-domain resource configuration periodicity of the aperiodic SRS; and/or
subframe configuration information of the aperiodic SRS.

9. The method as claimed in claim 8, wherein, the configuration information of time-domain resource configuration periodicity of the aperiodic SRS comprises:
configuration information instructing the terminal equipment to use preset time-domain resource configuration periodicity; or
configuration information indicating a value of the time-domain resource configuration periodicity used by the terminal equipment; or
configuration information associated with the subframe configuration information.

10. The method as claimed in claim 8, wherein, the subframe configuration information of the aperiodic SRS comprises:
starting information and length information of subframe resources used by the terminal equipment; or
information indicating whether one or more subframes are used by the terminal equipment for transmitting the aperiodic SRS; or
configuration information associated with the configuration information of the time-domain resource configuration periodicity.

11. An Evolved Node B, eNB, comprising:
a sending module (51), used to send time-domain configuration parameters of aperiodic Sounding Reference Symbol, SRS, to a terminal equipment through high-layer signalling or Physical Downlink Control Channel, PDCCH, signalling,
**characterized in that**,
the sending module (51) is further used to send aperiodic SRS activation signaling after sending the time-domain configuration parameters; the eNB further comprises a reception module used to:
receive the aperiodic SRS sent directly in accordance with the time-domain configuration parameters of the aperiodic SRS by the terminal equipment in all configuration subframes within one time-domain resource configuration periodicity after a number of subframes subsequent to sending the aperiodic SRS activation signaling by the eNB, wherein the all configuration subframes are determined according to the time-domain configuration parameters.

12. The eNB as claimed in claim 11, wherein, the time-domain configuration parameters of the aperiodic SRS sent by the sending module to the terminal equipment through the high-layer signalling or the PDCCH signalling, comprise:
configuration information of time-domain resource configuration periodicity of the aperiodic SRS, and/or
subframe configuration information of the aperiodic SRS,
wherein, the configuration information of the time-domain resource configuration periodicity of the aperiodic SRS comprises:
configuration information instructing the terminal equipment to use preset time-domain resource configuration periodicity , or
configuration information indicating a value of the time-domain resource configuration periodicity used by the terminal equipment, or
configuration information associated with the subframe configuration information;
the subframe configuration information of the aperiodic SRS comprises:
starting information and length information of subframe resources used by the terminal equipment, or
information indicating whether one or more subframes are used by the terminal equipment for transmitting the aperiodic SRS, or
configuration information associated with the configuration information of the time-domain resource configuration periodicity.

## Patentansprüche

1. Verfahren zum Übertragen eines aperiodischen Sounding Reference Symbols (SRS), umfassend:
Empfangen (S101) von Zeitbereichskonfigurationsparametern des aperiodischen SRS, die von einem Evolved Node B (eNB) gesendet werden, durch ein Endgerät über High-Layer-Signalisierung oder Physical Downlink Control Channel (PDCCH)-Signalisierung;
**dadurch gekennzeichnet, dass**
das Verfahren ferner umfasst:
Empfangen einer aperiodischen SRS-Aktivierungssignalisierung, die vom eNB gesendet wird, nachdem das eNB die Zeitbereichskonfigurationsparameter gesendet hat;
direktes Senden des aperiodischen SRS in Übereinstimmung mit den Zeitbereichskonfigurationsparametern des aperiodischen SRS in allen Konfigurationsunterrahmen innerhalb einer Zeitbereichsressourcenkonfigurationsperiodizität nach einer Anzahl von Subframes im Anschluss an den Empfang der aperiodischen SRS-Aktivierungssignalisierung, wobei alle Konfigurationssubframes innerhalb einer Zeitbereichsressourcenkonfigurationsperiodizität entsprechend den Zeitbereichskonfigurationsparametern bestimmt werden.

2. Verfahren nach Anspruch 1, wobei die Zeitbereichskonfigurationsparameter des aperiodischen SRS umfassen:
Konfigurationsinformationen zur Periodizität der Zeitbereichsressourcenkonfiguration des aperiodischen SRS; und/oder
Subframe-Konfigurationsinformationen des aperiodischen SRS.

3. Verfahren nach Anspruch 2, wobei die Konfigurationsinformationen zur Periodizität der Zeitbereichsressourcenkonfiguration des aperiodischen SRS umfassen:
Konfigurationsinformationen, die das Endgerät anweisen, die voreingestellte Konfigurationsperiodizität von Zeitbereichsressourcen zu verwenden; oder
Konfigurationsinformationen, die einen Wert der vom Endgerät verwendeten Konfigurationsperiodizität von Zeitbereichsressourcen angeben; oder
Konfigurationsinformationen, die mit den Subframe-Konfigurationsinformationen verknüpft sind.

4. Verfahren nach Anspruch 2, wobei die Subframe-Konfigurationsinformationen des aperiodischen SRS umfassen:
Startinformationen und Längeninformationen der vom Endgerät verwendeten Subframe-Ressourcen; oder
Informationen, die angeben, ob ein oder mehrere Subframes vom Endgerät zum Übertragen des aperiodischen SRS verwendet werden; oder
Konfigurationsinformationen, die mit Konfigurationsinformationen der Konfigurationsperiodizität von Zeitbereichsressourcen verknüpft sind.

5. Endgerät, umfassend:
ein Empfangsmodul (41) zum Empfangen von Zeitbereichskonfigurationsparametern eines aperiodischen Sounding Reference Symbols (SRS), das von einem Evolved Node B (eNB) über High-Layer-Signalisierung oder Physical Downlink Control Channel (PDCCH)-Signalisierung gesendet wird;
**dadurch gekennzeichnet, dass**
das Empfangsmodul (41) ferner dazu verwendet wird, um aperiodische SRS-Aktivierungssignale zu empfangen, die vom eNB gesendet werden, nachdem das eNB die Zeitbereichskonfigurationsparameter gesendet hat; wobei das Endgerät ferner umfasst: ein Sendemodul (42), das verwendet wird zum:
direkten Senden des aperiodischen SRS in Übereinstimmung mit den Zeitbereichskonfigurationsparametern des aperiodischen SRS in allen Konfigurationssubframes innerhalb einer Zeitbereichsressourcenkonfigurationsperiodizität nach einer Anzahl von Subframes im Anschluss an den Empfang der aperiodischen SRS-Aktivierungssignalisierung, wobei alle Konfigurationssubframes entsprechend den Zeitbereichskonfigurationsparametern bestimmt werden.

6. Endgerät nach Anspruch 5, wobei die Zeitbereichskonfigurationsparameter des aperiodischen SRS, die vom Empfangsmodul empfangen werden, Konfigurationsinformationen zur Zeitbereichsressourcenkonfigurationsperiodizität des aperiodischen SRS und/oder Subframe-Konfigurationsinformationen des aperiodischen SRS umfassen;
wobei die Konfigurationsinformationen der Zeitbereichsressourcenkonfigurationsperiodizität des aperiodischen SRS umfassen:
Konfigurationsinformationen, die das Endgerät anweisen, eine voreingestellte Konfigurationsperiodizität von Zeitbereichsressourcen zu verwenden, oder
Konfigurationsinformationen, die einen Wert der vom Endgerät verwendeten Zeitbereichsressourcenkonfigurationsperiodizität angeben, oder
Konfigurationsinformationen, die mit den Subframe-Konfigurationsinformationen verknüpft sind;
wobei die Subframe-Konfigurationsinformationen des aperiodischen SRS umfassen:
Startinformationen und Längeninformationen der vom Endgerät verwendeten Subframe-Ressourcen oder
Informationen, die angeben, ob ein oder mehrere Subframes vom Endgerät zur Übertragung des aperiodischen SRS verwendet werden, oder
Konfigurationsinformationen, die mit den Konfigurationsinformationen der Konfigurationsperiodizität von Zeitbereichsressourcen verknüpft sind.

7. Verfahren zum Übertragen eines aperiodischen Sounding Reference Symbols (SRS), umfassend:
Senden (S201) von Zeitbereichskonfigurationsparametern des aperiodischen SRS durch einen Evolved Node B (eNB) an ein Endgerät über High-Layer-Signalisierung oder Physical Downlink Control Channel (PDCCH)-Signalisierung;
**dadurch gekennzeichnet, dass**
das Verfahren ferner umfasst:
Senden einer aperiodischen SRS-Aktivierungssignalisierung durch den eNB nach dem Senden der Zeitbereichskonfigurationsparameter;
Empfangen des aperiodischen SRS durch das eNB entsprechend den Zeitbereichskonfigurationsparametern des aperiodischen SRS, das direkt vom Endgerät in allen Konfigurationsunterrahmen innerhalb einer Zeitbereichsressourcenkonfigurationsperiodizität nach einer Anzahl von Subframes im Anschluss an das Senden der aperiodischen SRS-Aktivierungssignalisierung durch das eNB gesendet wird, wobei alle Konfigurationsunterrahmen entsprechend den Zeitbereichskonfigurationsparametern bestimmt werden.

8. Verfahren nach Anspruch 7, wobei die Zeitbereichskonfigurationsparameter des aperiodischen SRS umfassen:
Konfigurationsinformationen zur Periodizität der Zeitbereichsressourcenkonfiguration des aperiodischen SRS; und/oder
Subframe-Konfigurationsinformationen des aperiodischen SRS.

9. Verfahren nach Anspruch 8, wobei die Konfigurationsinformationen der Zeitbereichsressourcenkonfigurationsperiodizität des aperiodischen SRS umfassen:
Konfigurationsinformationen, die das Endgerät anweisen, eine voreingestellte Zeitbereichsressourcen-Konfigurationsperiodizität zu verwenden; oder
Konfigurationsinformationen, die einen Wert der vom Endgerät verwendeten Konfigurationsperiodizität von Zeitbereichsressourcen angeben; oder
Konfigurationsinformationen, die mit den Subframe-Konfigurationsinformationen verknüpft sind.

10. Verfahren nach Anspruch 8, wobei die Subframe-Konfigurationsinformationen des aperiodischen SRS umfassen:
Startinformationen und Längeninformationen der vom Endgerät verwendeten Subframe-Ressourcen; oder
Informationen, die angeben, ob ein oder mehrere Subframes vom Endgerät zum Übertragen des aperiodischen SRS verwendet werden; oder
Konfigurationsinformationen, die mit den Konfigurationsinformationen der Konfigurationsperiodizität von Zeitbereichsressourcen verknüpft sind.

11. Evolved Node B, eNB, umfassend:
ein Sendemodul (51), das zum Senden von Zeitbereichskonfigurationsparametern des aperiodischen Sounding Reference Symbols (SRS) an ein Endgerät über eine High-Layer-Signalisierung oder eine Physical Downlink Control Channel (PDCCH)-Signalisierung verwendet wird,
**dadurch gekennzeichnet, dass**
das Sendemodul (51) ferner dazu verwendet wird, um nach dem Senden der Zeitbereichskonfigurationsparameter aperiodische SRS-Aktivierungssignalisierungen zu senden; das eNB ferner ein Empfangsmodul umfasst, das verwendet wird zum:
Empfangen des aperiodischen SRS, das direkt in Übereinstimmung mit den Zeitbereichskonfigurationsparametern des aperiodischen SRS durch das Endgerät in allen Konfigurationssubframes innerhalb einer Zeitbereichsressourcenkonfigurationsperiodizität nach einer Anzahl von Subframes im Anschluss an das Senden der aperiodischen SRS-Aktivierungssignalisierung durch den eNB, wobei alle Konfigurationssubframes entsprechend den Zeitbereichskonfigurationsparametern bestimmt werden.

12. eNB nach Anspruch 11, wobei die Zeitbereichskonfigurationsparameter des aperiodischen SRS, die vom Sendemodul über die High-Layer-Signalisierung oder die PDCCH-Signalisierung an das Endgerät gesendet werden, umfassen:
Konfigurationsinformationen von Zeitbereichsressourcenkonfigurationsperiodizität des aperiodischen SRS und/oder
Subframe-Konfigurationsinformationen des aperiodischen SRS,
wobei die Konfigurationsinformationen der Zeitbereichsressourcenkonfigurationsperiodizität des aperiodischen SRS umfassen:
Konfigurationsinformationen, die das Endgerät anweisen, eine voreingestellte Periodizität der Zeitbereichsressourcenkonfiguration zu verwenden, oder
Konfigurationsinformationen, die einen Wert der vom Endgerät verwendeten Zeitbereichsressourcenkonfigurationsperiodizität angeben, oder
Konfigurationsinformationen, die mit den Subframe-Konfigurationsinformationen verknüpft sind;
wobei die Subframe-Konfigurationsinformationen des aperiodischen SRS umfassen:
Startinformationen und Längeninformationen der vom Endgerät verwendeten Subframe-Ressourcen oder
Informationen, die angeben, ob ein oder mehrere Subframes vom Endgerät zur Übertragung des aperiodischen SRS verwendet werden, oder
Konfigurationsinformationen, die mit den Konfigurationsinformationen der Konfigurationsperiodizität von Zeitbereichsressourcen verknüpft sind.

## Revendications

1. Procédé permettant de transmettre un symbole de référence de sondage, SRS, apériodique, comprenant :
la réception (S101), par un équipement terminal, de paramètres de configuration dans le domaine temporel du SRS apériodique envoyé par un noeud B évolué, eNB, par le biais d'une signalisation de couche supérieure ou d'une signalisation de canal de commande de liaison descendante physique, PDCCH ;
**caractérisé en ce que,**
le procédé comprenant en outre :
la réception d'une signalisation d'activation de SRS apériodique envoyée par l'eNB après que l'eNB envoie les paramètres de configuration dans le domaine temporel ;
l'envoi direct, conformément aux paramètres de configuration dans le domaine temporel du SRS apériodique, du SRS apériodique dans toutes sous-trames de configuration pendant une périodicité de configuration de ressources dans le domaine temporel après un certain nombre de sous-trames suivant la réception de la signalisation d'activation de SRS apériodique, dans lequel toutes les sous-trames de configuration pendant une périodicité de configuration de ressources dans le domaine temporel sont déterminées selon les paramètres de configuration dans le domaine temporel.

2. Procédé selon la revendication 1, dans lequel les paramètres de configuration dans le domaine temporel du SRS apériodique comprennent :
des informations de configuration d'une périodicité de configuration de ressources dans le domaine temporel du SRS apériodique ; et/ou
des informations de configuration de sous-trame du SRS apériodique.

3. Procédé selon la revendication 2, dans lequel les informations de configuration d'une périodicité de configuration de ressources dans le domaine temporel du SRS apériodique comprennent :
des informations de configuration indiquant à l'équipement terminal d'utiliser la périodicité prédéfinie de configuration de ressources dans le domaine temporel ; ou
des informations de configuration indiquant une valeur de la périodicité de configuration de ressources dans le domaine temporel utilisée par l'équipement terminal ; ou
des informations de configuration associées aux informations de configuration de sous-trame.

4. Procédé selon la revendication 2, dans lequel les informations de configuration de sous-trame du SRS apériodique comprennent :
des informations de départ et des informations de longueur de ressources de sous-trame utilisées par l'équipement terminal ; ou
des informations indiquant si une ou plusieurs sous-trames sont utilisées par l'équipement terminal pour transmettre le SRS apériodique ; ou
des informations de configuration associées à des informations de configuration de la périodicité de configuration de ressources dans le domaine temporel.

5. Équipement terminal, comprenant :
un module de réception (41), utilisé pour recevoir des paramètres de configuration dans le domaine temporel d'un symbole de référence de sondage, SRS, apériodique, envoyé par un noeud B évolué, eNB, par le biais d'une signalisation de couche supérieure ou d'une signalisation de canal de commande de liaison descendante physique, PDCCH ;
**caractérisé en ce que,**
le module de réception (41) est en outre utilisé pour recevoir une signalisation d'activation de SRS apériodique envoyée par l'eNB après que l'eNB envoie les paramètres de configuration dans le domaine temporel, le terminal comprend en outre : un module d'envoi (42), utilisé pour :
envoyer directement, conformément aux paramètres de configuration dans le domaine temporel du SRS apériodique, le SRS apériodique dans toutes sous-trames de configuration pendant une périodicité de configuration de ressources dans le domaine temporel après un certain nombre de sous-trames suivant la réception d'une signalisation d'activation de SRS apériodique, dans lequel toutes les sous-trames de configuration sont déterminées selon les paramètres de configuration dans le domaine temporel.

6. Équipement terminal selon la revendication 5, dans lequel les paramètres de configuration dans le domaine temporel du SRS apériodique reçus par le module de réception comprennent des informations de configuration de la périodicité de configuration de ressources dans le domaine temporel du SRS apériodique et/ou des informations de configuration de sous-trame du SRS apériodique ;
dans lequel les informations de configuration d'une périodicité de configuration de ressources dans le domaine temporel du SRS apériodique comprennent :
des informations de configuration indiquant au dispositif terminal d'utiliser une périodicité prédéfinie de configuration de ressources dans le domaine temporel, ou
des informations de configuration indiquant une valeur de la périodicité de configuration de ressources dans le domaine temporel utilisée par l'équipement terminal, ou
des informations de configuration associées aux informations de configuration de sous-trame ;
les informations de configuration de sous-trame du SRS apériodique comprennent :
des informations de départ et des informations de longueur de ressources de sous-trame utilisées par l'équipement terminal, ou
des informations indiquant si une ou plusieurs sous-trames sont utilisées par l'équipement terminal pour transmettre le SRS apériodique, ou
des informations de configuration associées aux informations de configuration de périodicité de configuration de ressources dans le domaine temporel.

7. Procédé permettant de transmettre un symbole de référence de sondage, SRS, apériodique, comprenant :
l'envoi (S201), par un noeud B évolué, eNB, de paramètres de configuration dans le domaine temporel du SRS apériodique à un équipement terminal par le biais d'une signalisation de couche supérieure ou d'une signalisation de canal de commande de liaison descendante physique, PDCCH ;
**caractérisé en ce que,**
le procédé comprenant en outre :
l'envoi, par l'eNB, d'une signalisation d'activation de SRS apériodique après l'envoi des paramètres de configuration dans le domaine temporel ;
la réception, par l'eNB conformément aux paramètres de configuration dans le domaine temporel du SRS apériodique, du SRS apériodique envoyé directement par l'équipement terminal dans toutes sous-trames de configuration pendant une périodicité de configuration de ressources dans le domaine temporel après un certain nombre de sous-trames suivant l'envoi de la signalisation d'activation de SRS apériodique par l'eNB, dans lequel toutes les sous-trames de configuration sont déterminées selon les paramètres de configuration dans le domaine temporel.

8. Procédé selon la revendication 7, dans lequel les paramètres de configuration dans le domaine temporel du SRS apériodique comprennent :
des informations de configuration d'une périodicité de configuration de ressources dans le domaine temporel du SRS apériodique ; et/ou
des informations de configuration de sous-trame du SRS apériodique.

9. Procédé selon la revendication 8, dans lequel les informations de configuration d'une périodicité de configuration de ressources dans le domaine temporel du SRS apériodique comprennent :
des informations de configuration indiquant à l'équipement terminal d'utiliser une périodicité prédéfinie de configuration de ressources dans le domaine temporel ; ou
des informations de configuration indiquant une valeur de la périodicité de configuration de ressources dans le domaine temporel utilisée par l'équipement terminal ; ou
des informations de configuration associées aux informations de configuration de sous-trame.

10. Procédé selon la revendication 8, dans lequel les informations de configuration de sous-trame du SRS apériodique comprennent :
des informations de départ et des informations de longueur de ressources de sous-trame utilisées par l'équipement terminal ; ou
des informations indiquant si une ou plusieurs sous-trames sont utilisées par l'équipement terminal pour transmettre le SRS apériodique ; ou
des informations de configuration associées aux informations de configuration de périodicité de configuration de ressources dans le domaine temporel.

11. Noeud B évolué, eNB, comprenant :
un module d'envoi (51), utilisé pour envoyer des paramètres de configuration dans le domaine temporel d'un symbole de référence de sondage, SRS, apériodique à un équipement terminal par le biais d'une signalisation de couche supérieure ou d'une signalisation de canal de commande de liaison descendante physique, PDCCH,
**caractérisé en ce que,**
le module d'envoi (51) est en outre utilisé pour envoyer une signalisation d'activation de SRS apériodique après l'envoi des paramètres de configuration dans le domaine temporel ; l'eNB comprend en outre un module de réception utilisé pour :
recevoir le SRS apériodique envoyé directement conformément aux paramètres de configuration dans le domaine temporel du SRS apériodique par l'équipement terminal dans toutes sous-trames de configuration pendant une périodicité de configuration de ressources dans le domaine temporel après un certain nombre de sous-trames suivant l'envoi de la signalisation d'activation de SRS apériodique par l'eNB, dans lequel toutes les sous-trames de configuration sont déterminées selon les paramètres de configuration dans le domaine temporel.

12. ENB selon la revendication 11, dans lequel les paramètres de configuration dans le domaine temporel du SRS apériodique envoyés par le module d'envoi à l'équipement terminal par le biais de la signalisation de couche supérieure ou de la signalisation PDCCH, comprennent :
des informations de configuration de périodicité de configuration de ressources dans le domaine temporel du SRS apériodique, et/ou
des informations de configuration de sous-trame du SRS apériodique,
dans lequel les informations de configuration de la périodicité de configuration de ressources dans le domaine temporel du SRS apériodique comprennent :
des informations de configuration indiquant à l'équipement terminal d'utiliser une périodicité prédéfinie de configuration de ressources dans le domaine temporel, ou
des informations de configuration indiquant une valeur de la périodicité de configuration de ressources dans le domaine temporel utilisée par l'équipement terminal, ou
des informations de configuration associées aux informations de configuration de sous-trame ;
les informations de configuration de sous-trame du SRS apériodique comprennent :
des informations de départ et des informations de longueur de ressources de sous-trame utilisées par l'équipement terminal, ou
des informations indiquant si une ou plusieurs sous-trames sont utilisées par l'équipement terminal pour transmettre le SRS apériodique, ou
des informations de configuration associées aux informations de configuration de périodicité de configuration de ressources dans le domaine temporel.
